# EUROPÄISCHE PATENTANMELDUNG

(11) **EP 2 946 664 A1**
(43) Veröffentlichungstag der Anmeldung: **25.11.2015**
(21) Anmeldenummer: 15401043.3
(22) Anmeldetag: 06.05.2015
(51) Int. Cl.: A01M 7/00, A01C 23/04

(54) **EINSPÜLBEHÄLTER FÜR EINE FELDSPRITZE**

(30) Priorität: 19.05.2014 DE 102014107039
(71) Anmelder: Amazonen-Werke H. Dreyer GmbH & Co. KG, 49205 Hasbergen (DE)
(72) Erfinder:

(57) **Zusammenfassung**

Einspülbehälter (11) für eine Feldspritze, umfassend einen Ablaufbereich mit einer Ablauföffnung (2), durch die Flüssigkeit abgepumpt werden kann, eine Seitenwand (3), die im Ablaufbereich zu der Ablauföffnung (2) hin geneigt ist und eine Strudelbremse, die in dem Ablaufbereich angeordnet ist, gekennzeichnet dadurch, dass die Strudelbremse mehrere stiftförmige Strudelbremselemente (4) umfasst.

## Beschreibung

Die Erfindung bezieht sich auf einen Einspülbehälter für eine Feldspritze.

Feldspritzen sind beispielsweise aus der DE 39 38 673 C2 bekannt. Sie umfassen einen Einspülbehälter, der typischerweise über eine Saugleitung an den Spritzmitteltank angeschlossen ist. Im Einspülbehälter werden die auszubringenden Wirkstoffe mit einer Trägerflüssigkeit, üblicherweise Frischwasser, gemischt.

Um eine ausreichende Durchmischung und/oder Auflösung des Wirkstoffs oder der Wirkstoffe zu erreichen, ist es typischerweise vorteilhaft, wenn sich im Einspülbehälter ein Strudel ausbildet. Dafür kann beispielsweise die Trägerflüssigkeitseinmündung so ausgebildet sein, dass sich ein Strudel ausbildet.

Die Trägerflüssigkeitseinmündung kann z.B. wie in der DE 10 2013 107 445.6 beschrieben ausgebildet und/oder angeordnet sein. Insbesondere kann sie eine oder mehrere Düsen umfassen, die, z.B. in einem Bereich wenig unter der Einfüllöffnung des Einspülbehälters, so angeordnet sind, dass durch das in den Einspülbehälter einströmende Trägermittel eine rotierende und/oder strudelartige Bewegung in der im Einspülbehälter befindlichen Flüssigkeit erzeugt wird. Dies kann beispielsweise dadurch geschehen, dass mehrere oder alle Einlassdüsen an einer nahe unter der Einfüllöffnung des Einspülbehälters angeordneten Flüssigkeitsleitung angeordnet sind, deren Öffnungen tangential angeordnet sind oder tangential schräg nach unten so angeordnet sind, dass sie einen Strudel in eine Richtung erzeugen (also bei einer Ringleitung z.B. alle schräg nach unten links, wenn man radial auf die Leitung schaut, oder schräg nach unten rechts, wenn man radial auf die Leitung schaut). Natürlich können sich Strudel auch bei anderer Zuführung des Trägermittels ausbilden.

Wenn sich jedoch ein schneller Strudel ausbildet, kann sich in der Mitte ein Strudelauge bilden, in dem sich Luft befindet. Beim Absaugen aus dem Einspülbehälter wird dann statt der Flüssigkeit Luft aus dem Strudelauge angesaugt, so dass das Absaugen nicht mehr richtig funktioniert.

Um eine Ausbildung eines solchen Strudelauges zu vermeiden, kann ein Blech als Strudelbremse im Bereich (unmittelbar) oberhalb der Ablauföffnung angeordnet werden. Hierbei liegt die Achse, um die der Strudel rotiert, in der gleichen Ebene wie das Blech. Dabei kann es jedoch zu Ablagerungen von Pulver/Granulat an den Bereichen des Blechs kommen, die vom Strudel nicht beaufschlagt werden ("Rückseite"). Dies ist unvorteilhaft, da dann der oder die abgelagerten Wirkstoffe nicht in der Flüssigkeit aufgelöst werden und den Einspülbehälter verunreinigen. Dies kann insbesondere problematisch sein, wenn später mit der Feldspritze ein oder mehr andere Wirkstoffe ausgebracht werden sollen.

Der Erfindung liegt die Aufgabe zugrunde, einen verbesserten Einspülbehälter anzugeben.

Die Erfindung umfasst einen Einspülbehälter nach Anspruch 1 und eine Feldspritze nach Anspruch 14. Vorteilhafte Ausführungsformen sind in den abhängigen Ansprüchen beschrieben.

Ein erfindungsgemäßer Einspülbehälter für eine Feldspritze umfasst einen Ablaufbereich mit einer Ablauföffnung, durch die Flüssigkeit abgepumpt werden kann und eine Seitenwand, die (mindestens) im Ablaufbereich zu der Ablauföffnung hin geneigt ist. An der Ablauföffnung kann ein Rohrstück angeordnet sein, an das eine Pumpe angeschlossen werden kann, oder eine Pumpe kann in den Einspülbehälter integriert sein. Typischerweise ist die Ablauföffnung im unteren Bereich des Einspülbehälters angeordnet, wenn der Einspülbehälter verwendet wird. Wenn im Folgenden von "oben", "unten", "geneigt" oder ähnlichen geometrischen Beschreibungen die Rede ist, so beziehen sich diese üblicherweise auf die Anordnung des Einspülbehälters innerhalb der Feldspritze, in der sich der Einspülbehälter befindet, wenn er verwendet wird. Als Ablaufbereich wird hier ein die Ablauföffnung umfassender Bereich im unteren Bereich des Einspülbehälters bezeichnet.

Die Seitenwand des Einspülbehälters kann auch in weiteren oder allen Bereichen zur Ablauföffnung hin geneigt sein und/oder senkrecht angeordnet sein, damit sich möglichst wenig Rückstände an der Seitenwand ablagern können. Hierbei können die Steigungen der Seitenwand in verschiedenen Bereichen des Einspülbehälters verschieden sein.

Typischerweise umfasst der Einspülbehälter auch eine Einfüllöffnung, durch die Wirkstoffe, z.B. in Form von flüssigem Konzentrat, Pulver oder Granulat, eingefüllt werden können, und optional einen Deckel für die Einfüllöffnung. Typischerweise ist die Einfüllöffnung im oberen Bereich des Einspülbehälters angeordnet, wenn der Einspülbehälter verwendet wird. Die Einfüllöffnung ist typischerweise deutlich größer als die Ablauföffnung.

Der Einspülbehälter umfasst eine Strudelbremse, die in dem Ablaufbereich angeordnet ist und die Ausbildung eines Strudelauges verhindern soll, so dass ein Abpumpen der Flüssigkeit aus dem Einspülbehälter erfolgen kann, ohne dass Luft angesaugt wird. Erfindungsgemäß umfasst die Strudelbremse mehrere stiftförmige Strudelbremselemente. Sie kann beispielsweise mehr als vier, mehr als acht oder mehr als 12 stiftförmige Strudelbremselemente umfassen.

Mit so einer Strudelbremse kann eine gute Mittelaufmischung durch den Strudel erfolgen, und gleichzeitig das Ansaugen von Luft aus dem Strudelauge verhindert werden, da dieser vor dem Absaugbereich abgebremst wird.

Ein Strudelbremselement wird als stiftförmig bezeichnet, wenn es in einer Richtung, z.B. der Höhe, deutlich größere Ausmaße aufweist, als in den Richtungen senkrecht dazu, also z.B. seine Höhe deutlich größer als sein größter Querschnitt senkrecht zur Höhe ist. Deutlich größer kann hierbei z.B. mehr als zweifach so groß oder mehr als vierfach so groß, oder mehr als achtfach so groß oder mehr als zehnfach, oder mehr als fünfzehnfach so groß bedeuten.

Stiftförmige Strudelbremselemente haben den Vorteil, dass sie durch den Strudel vollständig umspült werden, so dass sich keine Ablagerungen an ihnen bilden.

Die stiftförmigen Strudelbremselemente können so angeordnet sein, dass sie ungefähr vertikal stehen, wenn der Einspülbehälter verwendet wird. Typischerweise sind sie im Ablaufbereich, also dem unteren Bereich des Einspülbehälters, angeordnet.

Hinter stiftförmigen, senkrecht angeordneten Strudelbremselementen können sich z.B. im Strudel kleine Gegenwirbel ausbilden, die für eine Reinigung der Strudelbremselemente sorgen und Ablagerungen verhindern.

Ein stiftförmiges Strudelbremselement kann beispielsweise einen runden, ovalen oder mehreckigen, z.B. (regelmäßigen oder unregelmäßigen) fünfeckigen oder (regelmäßigen oder unregelmäßigen) sechseckigen Querschnitt haben. Hierbei wird typischerweise der Querschnitt senkrecht zur Dimension betrachtet, in der das Strudelbremselement die größten Ausmaße aufweist. Optional kann der Querschnitt des Strudelbremselements in dieser Richtung variieren (z.B. der Durchmesser sich ändern) oder der Querschnitt kann optional über einen Bereich oder im gesamten Bereich des Strudelbremselementes konstant bleiben.

Die Strudelbremselemente können, z.B. im Ablaufbereich, durch Steck- oder Schraubverbindungen befestigt sein oder einteilig mit dem Ablaufbereich ausgebildet sein. Sie können als hohle Elemente oder massive Elemente ausgebildet sein.

Die Seitenwand des Ablaufbereichs oder des gesamten Einspülbehälters kann so ausgebildet sein, dass sie eine Ausbildung eines Strudels begünstigt. Insbesondere kann sie z.B. ohne scharfe Ecken und/oder trichterförmig mit rundem oder ovalem Querschnitt ausgebildet sein. Es können Rillen in der Seitenwand des Ablaufbereichs oder des gesamten Einspülbehälters angeordnet sein, die eine Ausbildung eines Strudels begünstigen und/oder die Seitenwand kann im Ablaufbereich ungefähr konzentrisch um die Ablauföffnung angeordnet sein, so dass ein Strudel leichter ausgebildet werden kann. Die Seitenwand kann im oberen Bereich des Einspülbehälters stärker geneigt (bis hin zu etwa senkrecht) angeordnet sein als im unteren Bereich, was die Ausbildung eines Strudels begünstigen kann.

Ein Einspülbehälter kann, typischerweise im Ablaufbereich, zwei, drei, vier oder mehr stiftförmige Strudelbremselemente umfassen, die an einem Teil der Seitenwand in einer Linie angeordnet sind. Sie können insbesondere z.B. entlang der Neigungsrichtung der Seitenwand angeordnet sein (z.B. in radialer Richtung bei trichterförmiger Anordnung des Ablaufbereichs). Als ein Teil der Seitenwand wird hierbei ein Teil der Seitenwand auf einer Seite von der Ablauföffnung aus betrachtet. Solche in einer Linie angeordnete Strudelbremselemente werden im Folgenden auch als Reihe von Strudelbremselementen bezeichnet.

Ein Einspülbehälter kann insbesondere zwei, drei, vier oder mehr Reihen von Strudelbremselementen umfassen. Jede der Reihen von Strudelbremselementen kann entlang der Neigungsrichtung der Seitenwand angeordnet sein, auf der sie angeordnet ist. Insbesondere können diese Reihen von Strudelbremselementen in gleichem Abstand zueinander angeordnet sein, also z.B. entlang eines Kreises um die Ablauföffnung im gleichen Abstand zueinander angeordnet sein, also z.B. so angeordnet sein, dass einander in der Reihe entsprechende Strudelbremselemente ein regelmäßiges Vieleck bilden (also z.B. die jeweils am nächsten an der Ablauföffnung liegenden Strudelbremselemente ein regelmäßiges Vieleck bilden).

Die Ablauföffnung des Einspülbehälters kann durch ein Sieb abgedeckt sein, so dass ein Abpumpen von größeren Teilen, z.B. Verunreinigungen oder ungelösten Pulverklumpen, verhindert werden kann. Das Sieb kann grob oder fein sein. Ein grobes Sieb könnte z.B. auch als Gitter bezeichnet werden.

Der Einspülbehälter kann zusätzlich Düsen umfassen, die, z.B. im Ablaufbereich, (knapp) oberhalb der Ablauföffnung angeordnet sind, um diese freispülen zu können. Dies kann insbesondere beim Einfüllen von Pulver das Risiko eines Verklebens der Ablauföffnung reduzieren. Diese Düsen können z.B. durch eine Ringleitung gespeist werden, die um den Ablaufbereich herum angeordnet ist.

Der Einspülbehälter kann einen Injektor umfassen, durch den unterhalb der Ablauföffnung, z.B. in waagrechter Richtung, Flüssigkeit injiziert werden kann, um die Wahrscheinlichkeit eines Verstopfens der Ablauföffnung und/oder der Ablaufleitung zu verringern. Typischerweise ist der Injektor so angeordnet, dass die injizierte Flüssigkeit zusammen mit der Flüssigkeit, die durch die Ablauföffnung abgepumpt wird, abgepumpt werden kann. Dadurch wird die Wahrscheinlichkeit von Ablagerungen unterhalb der Ablauföffnung verringert.

Der Injektor kann zusätzlich eine vorgelagerte Druckkammer umfassen. Insbesondere kann dies bedeuten, dass die Flüssigkeitszuführung an der Injektoröffnung so verengt wird, dass die Flüssigkeit mit höherer Geschwindigkeit aus dem Injektor kommt und so die Ablauföffnung und/oder Ablaufleitung besser freispülen kann. Die Ausformung des Injektors mit vorgelagerter Druckkamer kann dabei die Absaugleistung verbessern.

Der Einspülbehälter kann eine Spüleinrichtung für einen Behälter umfassen. Typischerweise der Behälter kann über die Spüleinrichtung gekippt werden, und dann durch eine Flüssigkeit, typischerweise Frischwaser, gespült werden. So können Wirkmittelreste, z.B. Konzentratreste und/oder Pulver oder Granulat möglichst rückstandsfrei aus dem Behälter, aus dem sie eingefüllt wurden, entfernt werden. Die Spüleinrichtung kann z.B. durch Druck aktiviert werden. Um den Behälter zu spülen, kann z.B. dieser über die Spüleinrichtung gestülpt werden, auf diese Druck, z.B. nach unten, ausgeübt werden, so dass Flüssigkeit austritt und den Behälter spült. Da die Spüleinrichtung im Einspülbehälter, z.B. im Ablaufbereich, angeordnet ist, werden damit die Rückstände aus dem Behälter direkt in den Einspülbehälter gespült. Die Spüleinrichtung kann z.B. stiftförmige ausgebildet sein. Sie kann z.B. anstelle eines oder mehrerer stiftförmiger Strudelbremselemente angeordnet sein und optional als Strudelbremselement wirken. Sie kann die gleiche oder eine andere Form als andere Strudelbremselemente haben.

Der Einspülbehälter kann einen Deckel umfassen. An dem Deckel können Befestigungsmöglichkeiten für einen Behälter umfasst sein, an denen bei geöffnetem Deckel ein Behälter befestigt werden kann. Diese Befestigungsgmöglichkeiten können beispielsweise als Erhöhungen oder Stifte ausgebildet sein oder solche umfassen, auf die ein Behälter aufgesteckt werden kann.

Der Einspülbehälter kann eine Messskala umfassen, anhand derer die Füllmenge des Einspülbehälters abgelesen werden kann. Dies kann beispielsweise vorteilhaft sein, um die Menge an zugegebenem Wirkstoff zu messen. Die Messskala kann beispielsweise im Einspülbehälter vertikal angeordnet sein.

Der Einspülbehälter kann eine Ringspülung umfassen, die typischerweise in der Nähe des oberen Randes des Einspülbehälters angeordnet ist. Die Trägerflüssigkeitseinmündungen, z.B. Düsen, der Ringspülung können so angeordnet sein, dass sie einen Strudel erzeugen, also z.B. tangential schräg nach unten angeordnet sein, jeweils so, dass die Trägerflüssigkeitseinmündungen, z.B. Düsen, einen Strudel in eine Richtung erzeugen. Die Trägerflüssigkeitseinmündungen, z.B. Düsen, der Ringspülung können in einem Bereich unmittelbar unterhalb der Einfüllöffnung des Einspülbehälters angeordnet sein, und optional mit jeweils gleichen Abständen zwischen zwei aufeinanderfolgenden Trägerflüssigkeitseinmüdungen, z.B. Düsen, angeordnet sein.

Die Trägerflüssigkeitseinmündungen können schräg zur Radialen in den Einspülbehälter hineingerichtet sein, und/oder schräg nach unten angeordnet sein. Die Trägerflüssigkeitseinmündungen können zumindest annähernd in die gleiche Richtung ausgerichtet sein, so dass in ungehinderter Weise ein wirksamer Strudel für die im Einspülbehälter befindliche Flüssigkeit erzeugt wird.

Der Einspülbehälter kann einteilig mit dem Ablaufbereich ausgebildet sein, oder zweiteilig mit dem Ablaufbereich ausgebildet sein. Im Fall der zweiteiligen Ausbildung kann der Ablaufbereich beispielsweise so ausgebildet sein, dass der untere Rand des oberen Bereichs des Einspülbehälters zwischen eine äußere und eine innere Seitenwand des Ablaufbereichs eingeklemmt und dann befestigt werden kann, z.B. durch Schrauben, Nieten oder ähnliches. Hierzu ist zu bemerken, dass wenn in diesem Text die Seitenwand des Ablaufbereichs/Einspülbehälters beschrieben wird, sich dies immer auf die innere Seitenwand bezieht, außer wenn explizit auf eine äußere Seitenwand Bezug genommen wird. Zwischen äußerer und innerer Seitenwand des Ablaufbereichs können Flüssigkeitsleitungen oder ähnliches angeordnet sein, beispielsweise eine Ringleitung zum Speisen der Düsen oberhalb der Ablauföffnung und/oder eine Flüssigkeitszufuhr für eine Spüleinrichtung für einen Behälter.

Die Erfindung umfasst des Weiteren eine Feldspritze, die einen zuvor beschriebenen Einspülbehälter umfasst.

Aspekte der Erfindung werden im Folgenden anhand der Figuren beschrieben. Hierbei zeigt
Fig. 1 einen Ablaufbereich eines Einspülbehälters;
Fig. 2 einen Querschnitt durch einen Ablaufbereich eines Einspülbehälters;
Fig. 3a einen geschlossenen Einspülbehälter; und
Fig. 3b einen offenen Einspülbehälter.

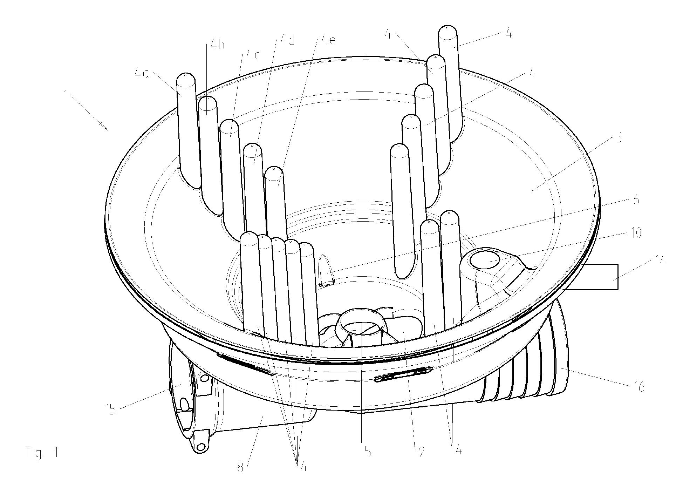

Fig. 1 zeigt einen Ablaufbereich 1 eines Einspülbehälters mit einer Ablauföffnung 2, einer Seitenwand 3 und stiftförmigen Strudelbremselementen 4. Beispielhaft sind die Strudelbremselemente in vier Reihen angeordnet. In anderen Ausführungsformen können sie in zwei, drei, fünf oder mehr Reihen angeordnet sein oder nicht in Reihen angeordnet sein (nicht gezeigt).

Die Strudelbremselemente einer Reihe sind beispielhaft mit 4a, 4b, 4c, 4d und 4e bezeichnet.

In einer (in diesem Beispiel anderen) Reihe von Strudelbremselementen ist eine optionale Spüleinrichtung 10 für Behälter angeordnet. In dem gezeigten Beispiel ist nur die Flüssigkeitszuführung der Spüleinrichtung 10 gezeigt. Die Spüleinrichtung 10 kann beispielsweise durch die optionale Flüssigkeitszuführung 14 (oder eine andere Flüssigkeitszuführung) gespeist werden. Alternativ oder zusätzlich kann die Flüssigkeitszuführung 14 auch die Düsen 6 speisen.

Die Ablauföffnung wird in diesem Beispiel durch ein optionales Sieb 5 abgedeckt, das ein Abpumpen von größeren Teilen verhindert und damit das Risiko eines Verstopfens der Ablauföffnung verringert.

Im Ablaufbereich 1 sind oberhalb der Ablauföffnung 2 optionale Düsen 6 angeordnet, die die Ablauföffnung freispülen helfen können.

Ebenfalls beispielhaft eingezeichnet ist der optionale Injektor 8, der durch Rohröffnung 15 mit Flüssigkeit versorgt werden kann. Das Abpumpen von Flüssigkeit durch die Ablauföffnung 2 kann durch das in diesem Beispiel vorhandene Rohr 16 durchgeführt werden, das an die Ablauföffnung 2 anschließend angeordnet ist.

In dem gezeigten Beispiel sind die Strudelbremselemente 4 ungefähr senkrecht im Ablaufbereich angeordnet. Ihr Querschnitt nimmt in dem gezeigten Beispiel mit zunehmender Höhe leicht ab, was zu erhöhter Stabilität der Strudelbremselemente 4 führen kann. In anderen Ausführungsformen kann der Querschnitt gleich bleiben oder sich anders ändern (nicht gezeigt).

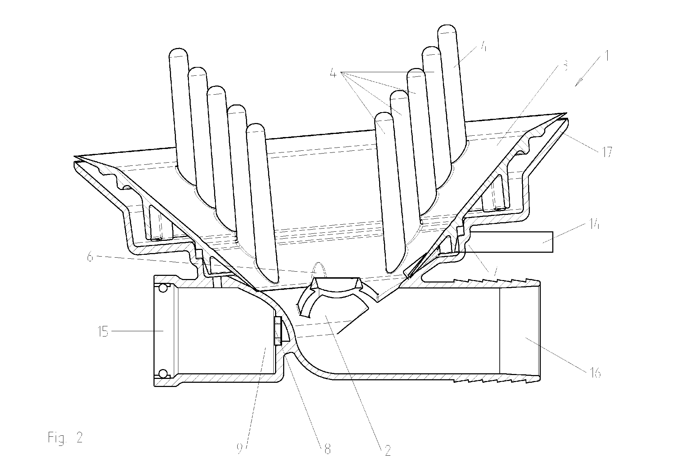

Fig. 2 zeigt einen Ablaufbereich 1 eines Einspülbehälters im Querschnitt. Entsprechende Teile tragen die gleichen Nummern wie in Fig. 1. Der Querschnitt kann ein Querschnitt des in Fig. 1 gezeigten Ablaufbereichs sein, oder der Querschnitt einer anderen Ausführungsform.

Im Querschnitt der Fig. 2 ist eine optionale Ringleitung 7 erkennbar, die die Düsen 6 speisen kann. Die Ringleitung 7 ist in dem gezeigten Beispiel zwischen der inneren Seitenwand 3 des Ablaufbereichs und äußerer Seitenwand 17 angeordnet. Die Ringleitung 7 kann durch Flüssigkeitszuführung 14 gespeist werden.

In anderen Ausführungsformen können die Düsen 6 anders gespeist werden (nicht gezeigt), oder keine äußere Seitenwand vorhanden sein (nicht gezeigt).

Ebenfalls sichtbar ist der optionale Injektor 8, der in dem gezeigten Beispiel durch die Rohröffnung 15 mit Flüssigkeit gespeist werden kann. Insbesondere ist die Druckkammer 9 sichtbar, von der die Flüssigkeit durch eine enge Öffnung geführt wird, so dass die Geschwindigkeit erhöht wird, mit dem die Flüssigkeit (unten) an der Ablauföffnung 2 vorbeigeführt werden kann, so dass die Ablauföffnung 2 besser freigespült werden kann und die Absaugleistung verbessert werden kann.

Ein Abpumpen von Flüssigkeit durch die Ablauföffnung 2 kann wiederum durch das Rohr 16 erfolgen. In dem gezeigten Beispiel wird dabei auch die durch den Injektor 8 injizierte Flüssigkeit abgepumpt.

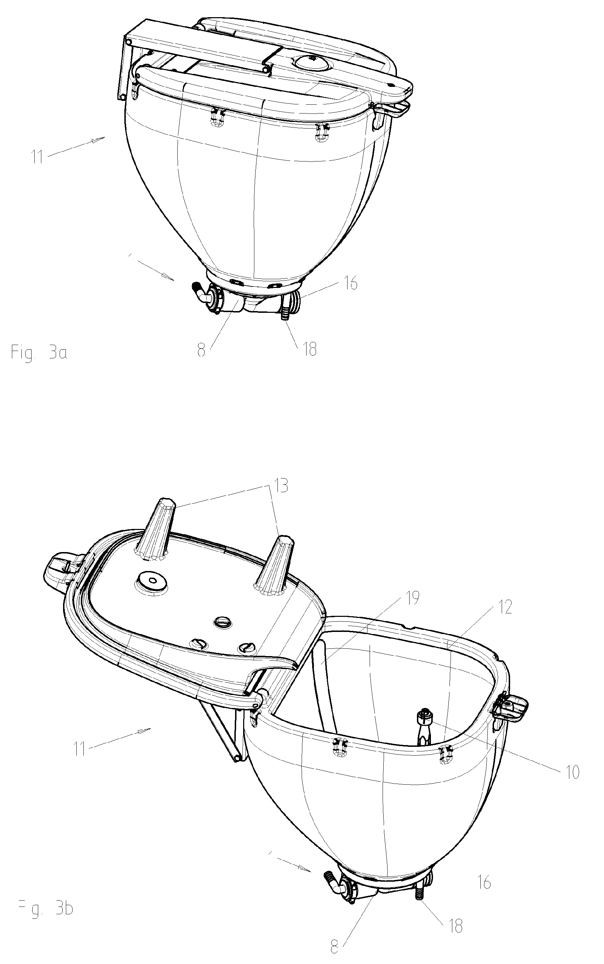

Fig. 3a zeigt einen geschlossenen Einspülbehälter 11, in Fig. 3b ist der Einspülbehälter 11 von Fig. 3a mit geöffnetem Deckel gezeigt. Der in Fig. 3a und 3b gezeigte Einspülbehälter 11 ist zweiteilig mit dem Ablaufbereich 1 ausgebildet. In anderen Ausführungsformen können der Einspülbehälter und Ablaufbereich 1 einteilig ausgebildet sein (nicht gezeigt). Der Ablaufbereich 1 kann z.B. wie in Fig. 1 und/oder Fig. 2 gezeigt ausgebildet sein, oder anders ausgebildet sein.

Ebenfalls eingezeichnet ist das optionale Anschlussstück 18, durch das in dem gezeigten Beispiel die optionale Spüleinrichtung 10 für Behälter versorgt wird.

Wie in dem Beispiel gezeigt, ist die Spüleinrichtung 10 für Behälter typischerweise so angeordnet, dass sie fast bis zur Einfüllöffnung des Einspülbehälters reicht, so dass Behälter einfach gespült werden können. Die Spüleinrichtung 10 kann z.B. durch Druck aktivierbar sein, also durch ein Drücken des zu spülenden Behälters nach unten, oder anders aktivierbar sein.

Ebenfalls eingezeichnet sind die optionalen Befestigungsmöglichkeiten 13 für Behälter, mit denen ein Behälter am Deckel befestigt werden kann. In dem gezeigten Beispiel sind die Befestigungsmöglichkeiten 13 als Erhöhungen oder Stifte ausgebildet, auf die ein Behälter aufgesteckt und damit am Deckel befestigt werden kann. Diese Befestigung kann nur erfolgen, wenn der Deckel geöffnet ist (siehe Fig. 3b).

Ebenfalls in Fig. 3b ersichtlich ist die optionale Ringspülung 12. Die Ringspülung ist in dem gezeigten Beispiel in der Nähe des oberen Randes der Einfüllöffnung so angeordnet, dass durch sie ein Strudel erzeugt werden kann oder die Ausbildung eines Strudels begünstigt wird. Die Düsen der Ringspülung können z.B. so angeordnet sein, dass sie einen Strudel erzeugen, also z.B. tangential oder tangential schräg nach unten, jeweils so, dass die Düsen einen Strudel in eine Richtung erzeugen (nicht gezeigt).

Ebenfalls in Fig. 3b ersichtlich ist die optionale Messskala 19.

## Patentansprüche

1. Einspülbehälter (11) für eine Feldspritze, umfassend einen Ablaufbereich mit einer Ablauföffnung (2), durch die Flüssigkeit abgepumpt werden kann, eine Seitenwand (3), die im Ablaufbereich zu der Ablauföffnung hin geneigt ist und eine Strudelbremse, die in dem Ablaufbereich angeordnet ist, **gekennzeichnet dadurch, dass** die Strudelbremse mehrere stiftförmige Strudelbremselemente (4) umfasst.

2. Einspülbehälter (11) nach Anspruch 1, wobei die Form der Seitenwand (3) des Ablaufbereichs oder des gesamten Einspülbehälters eine Ausbildung eines Strudels begünstigt.

3. Einspülbehälter (11) nach Anspruch 1 oder 2, wobei die Strudelbremse zwei, drei, vier oder mehr stiftförmige Strudelbremselemente (4a, 4b, 4c, 4d, 4e) umfasst, die an einem Teil der Seitenwand in einer Linie angeordnet sind, und dabei optional in einer Linie entlang der Neigungsrichtung der Seitenwand (3) angeordnet sind, wobei die an einer Seite der Seitenwand in der Linie angeordneten stiftförmigen Strudelbremselemente im Folgenden auch als Reihe bezeichnet werden.

4. Einspülbehälter (11) nach Anspruch 3, wobei die Strudelbremse zwei, drei, vier oder mehr Reihen umfasst, die optional mit gleichem Abstand zueinander angeordnet sind.

5. Einspülbehälter (11) nach einem der Ansprüche 1 bis 4, wobei die Ablauföffnung (2) durch ein Sieb (5) abgedeckt ist.

6. Einspülbehälter (11) nach einem der Ansprüche 1 bis 5, wobei Düsen (6) oberhalb der Ablauföffnung angeordnet sind, die optional durch eine Ringleitung (7) gespeist werden können.

7. Einspülbehälter (11) nach einem der Ansprüche 1 bis 6, wobei der Ablaufbereich (1) einen Injektor (8) umfasst, mit dem Flüssigkeit unterhalb der Ablauföffnung (2) injiziert werden kann.

8. Einspülbehälter (11) nach Anspruch 7, wobei der Injektor (8) eine vorgelagerte Druckkammer (9) umfasst.

9. Einspülbehälter (11) nach einem der Ansprüche 1 bis 8, wobei der Ablaufbereich (1) eine Spüleinrichtung (10) für einen Behälter umfasst.

10. Einspülbehälter nach einem der Ansprüche 1 bis 9, wobei der Einspülbehälter einen Deckel umfasst, und der Deckel eine Befestigungsmöglichkeit (13) für einen Behälter umfasst.

11. Einspülbehälter nach einem der Ansprüche 1 bis 10, wobei der Einspülbehälter eine Messskala (19) umfasst.

12. Einspülbehälter (11) nach einem der Ansprüche 1 bis 11, wobei der Einspülbehälter (11) eine Ringspülung (12) umfasst, durch die ein Strudel erzeugt werden kann.

13. Einspülbehälter (11) nach einem der Ansprüche 1 bis 12, wobei der Einspülbehälter (11) einteilig mit dem Ablaufbereich (1) ausgebildet ist oder wobei der Einspülbehälter (11) und sein Ablaufbereich (1) mehrteilig, vorzugsweise zweiteilig ausgebildet sind.

14. Feldspritze umfassend einen Einspülbehälter (11) nach einem der Ansprüche 1 bis 13.
